# FASCICULE DE BREVET EUROPEEN

(11) **EP 1 361 442 B1**
(45) Date de publication et mention de la délivrance du brevet: **19.07.2006**
(21) Numéro de dépôt: 03101238.8
(22) Date de dépôt: 05.05.2003
(51) Int. Cl.: G01N 35/08, G01N 1/00

(54) **Dispositif et procédé de distribution de produits liquides**
Vorrichtung und Verfahren zur Ausgabe von flüssigen Produkten
method and device for dispensing liquids

(30) Priorité: 07.05.2002 FR 0205716
(43) Date de publication de la demande: 12.11.2003
(73) Titulaire: COMMISSARIAT A L'ENERGIE ATOMIQUE, 75752 Paris Cédex 15 (FR)
(72) Inventeur: Charles, Raymond, 38430 Saint-Jean de Moirans (FR); Fouillet, Yves, 38340 Voreppe (FR); Sarrut, Nicolas, 38170 Seyssinet-Pariset (FR); Claustre, Patricia, 38430, Moirans (FR)
(74) Mandataire: Poulin, Gérard

(56) Documents cités:
- EP-A- 0 377 202
- EP-A- 1 002 570
- GB-A- 2 359 765
- US-A- 3 726 297
- US-A- 4 015 938

## Description

### DOMAINE TECHNIQUE

La présente invention se rapporte à un dispositif de distribution d'au moins un produit liquide, le dispositif comprenant au moins un tube d'injection alimenté par un produit liquide et comportant un orifice de sortie apte à coopérer avec un orifice d'entrée d'un tube de réception de chaque produit liquide.

Plus spécifiquement, l'invention concerne un dispositif de distribution d'une pluralité de produits liquides, la distribution étant réalisée de sorte que les produits liquides soient éjectés du dispositif par faibles quantités, successivement, et selon un ordre déterminé.

La présente invention a également trait à un procédé de distribution d'au moins un produit liquide, le procédé étant susceptible d'être mis en oeuvre par l'intermédiaire d'un tel dispositif de distribution.

### ETAT DE LA TECHNIQUE ANTERIEURE

Dans ce domaine technique, plusieurs réalisations ont déjà été proposées.

On connaît en effet les vannes multi-voies classiques, destinées à la distribution d'une pluralité de produits liquides. Ce type de vanne comprend généralement une pluralité de tubes d'injection chacun alimenté par un produit liquide différent et de préférence non-miscible, ainsi qu'un tube de réception unique pouvant coopérer successivement et selon un ordre déterminé avec chacun des tubes d'injection. De cette manière, le tube de réception comprend en son intérieur une pluralité de produits liquides également appelée « train de bouchons », ces produits liquides étant aptes à être éjectés de la vanne selon l'ordre déterminé de coopération entre le tube de réception et les divers tubes d'injection de la vanne.

Cependant, l'utilisation d'une telle vanne multi-voies conduit à l'apparition d'inconvénients majeurs. En effet, la partie mobile de cette vanne, autorisant la coopération entre un tube d'injection donné et le tube de réception, est successivement en contact avec chacun des produits liquides à éjecter. Ainsi, lors du passage d'un premier à un second tube d'injection, la partie mobile de la vanne multi-voies peut transporter une petite quantité de produit liquide provenant du premier tube d'injection en direction du second tube d'injection, et engendrer ainsi un mélange avec le produit liquide se trouvant dans le second tube d'injection. Suite à la répétition des mouvements de la partie mobile de la vanne entre les différents tubes d'injection, les produits liquides situés dans ces tubes se trouvent mélangés les uns aux autres, ceci étant bien entendu au détriment de leur pureté.

De plus, la mise en oeuvre d'une vanne multi-voies ne permet pas toujours de procéder à l'injection de faibles volumes de produits liquides. Cette impossibilité est engendrée par la présence dans les vannes multi-voies de volumes morts importants, n'autorisant habituellement pas d'injections inférieures au millilitre.

De l'art antérieur, on connaît également les raccords en T comprenant deux tubes d'injection chacun alimenté par un liquide non-miscible, ainsi qu'un tube de réception apte à récupérer un train de bouchons constitué par l'alternance des deux produits liquides non-miscibles, voir par exemple GB 2 359 765 A.

Néanmoins, ce type de raccord a une vitesse de fonctionnement relativement limitée. Par ailleurs, les raccords en T sont très sensibles à la présence de gaz à l'intérieur des produits liquides. En effet, lorsque l'un des deux produits liquides contient des bulles de gaz et qu'il est injecté dans le tube de réception, la présence des bulles de gaz a parfois tendance à faire remonter une petite quantité de ce produit liquide dans le raccord, entraînant par conséquent un contact avec l'autre produit liquide, provoquant ainsi la contamination de ce dernier.

### EXPOSÉ DE L'INVENTION

L'invention a donc pour but de proposer un dispositif de distribution d'au moins un produit liquide, le dispositif comprenant au moins un tube d'injection alimenté par un produit liquide et comportant un orifice de sortie apte à coopérer avec un orifice d'entrée d'un tube de réception de chaque produit liquide, le dispositif remédiant en outre et au moins partiellement aux inconvénients mentionnés ci-dessus relatifs aux réalisations de l'art antérieur.

Plus précisément, le but de l'invention est de proposer un dispositif de distribution d'au moins un produit liquide, dont le fonctionnement n'est en aucun cas altéré par la présence de gaz à l'intérieur du/des produits liquides à distribuer, et dont la conception interdit spécifiquement le mélange entre plusieurs produits liquides dans un même tube d'injection.

En outre, l'invention a également pour but de présenter un procédé de distribution d'au moins un produit liquide, le procédé étant susceptible d'être mis en oeuvre par l'intermédiaire d'un dispositif de distribution répondant au but cité ci-dessus.

Pour ce faire, l'invention a tout d'abord pour objet un dispositif de distribution d'au moins un produit liquide, le dispositif comprenant au moins un tube d'injection alimenté par un produit liquide et comportant un orifice de sortie susceptible de coopérer avec un orifice d'entrée d'un tube de réception de chaque produit liquide. Selon l'invention, l'orifice de sortie de chaque tube d'injection et l'orifice d'entrée du tube de réception débouchent dans un réservoir étanche rempli d'un liquide non-miscible, l'orifice de sortie de chaque tube d'injection étant espacé de l'orifice d'entrée du tube de réception et apte à être situé à proximité de ce dernier, le dispositif comprenant également des moyens de mise en pression du liquide non-miscible.

Avantageusement, à l'aide d'un tel agencement dans lequel les liquides à distribuer peuvent être introduits dans les tubes d'injection par mise sous pression ou par injection de volumes définis, le dispositif de distribution selon l'invention permet d'éviter le contact entre les différents produits liquides se trouvant dans leurs tubes d'injection respectifs, et est largement insensible à la présence de bulles de gaz dans ces produits liquides.

En effet, lors d'une injection d'un produit liquide depuis un tube d'injection quelconque, une goutte du produit liquide se forme et fait saillie dans le réservoir rempli d'un liquide non-miscible, dans lequel la goutte de produit est confinée et grossit jusqu'à entrer en contact avec l'orifice d'entrée du tube de réception, de manière à former un pont liquide entre ces deux tubes. Notons que lorsque le nombre de tube d'injection est différent de un, il est avantageux de munir l'orifice de sortie de chaque tube d'injection de moyens de guidage de la goutte, afin que cette dernière soit guidée en direction de l'orifice d'entrée du tube de réception. Ces moyens de guidage évitent ainsi à la goutte formée d'entrer en contact avec les orifices de sortie des tubes d'injection se situant à proximité, et non avec l'orifice d'entrée du tube de réception comme cela est impératif pour le bon fonctionnement du dispositif selon l'invention.

Suite à la formation de la goutte entre les deux orifices, à l'aide des moyens de mise en pression du liquide non-miscible, la goutte de produit liquide est décrochée et poussée vers l'intérieur du tube de réception. De cette manière, dans un cas où le produit liquide injecté dans le tube est muni de bulles de gaz, celles-ci sont aptes à s'échapper dans le réservoir, en empruntant l'espace prévu entre le tube d'injection et le tube de réception, sans engendrer de déplacement du produit liquide injecté vers un autre tube d'injection.

Par ailleurs, le dispositif de distribution selon l'invention présente un liquide non-miscible comme élément destiné à créer une voie de passage entre un tube d'injection donné et le tube de réception. Cette propriété spécifique de l'invention minimise par conséquent fortement les risques de mélange entre les divers produits liquides à distribuer, dans le sens où contrairement au phénomène rencontré lors de l'utilisation d'un élément mobile d'une vanne multi-voies, aucun résidu de produit liquide injecté ne reste accroché au liquide non-miscible. L'intégralité du volume de produit liquide injecté est donc introduit à l'intérieur du tube de réception, ce qui interdit par conséquent tout contact entre le produit liquide injecté et un autre tube d'injection utilisé ultérieurement.

De plus, l'absence de contact entre les différents produits liquides peut être encore davantage renforcée, dans le cas où la mise en pression du liquide non-miscible est stoppée uniquement après une introduction dans le tube de réception de l'intégralité de la goutte de produit liquide, suivie d'une faible quantité de liquide non-miscible.

En procédant de cette façon, la partie du liquide non-miscible ayant participé au confinement de la goutte de produit entre le tube d'injection et le tube de réception se trouve elle aussi injectée dans le tube de réception, de sorte que ladite goutte ne peut plus entrer en contact avec un produit liquide se trouvant dans un autre tube d'injection. Par ailleurs, un autre avantage afférent à la présence du liquide non-miscible à l'intérieur du tube de réception est de pouvoir obtenir un train de bouchons dont les produits liquides sont séparés les uns des autres par l'intermédiaire de ce liquide non-miscible, interdisant ainsi le mélange entre les produits liquides à l'intérieur du tube de réception.

Préférentiellement, le dispositif de distribution comprend au moins deux tubes d'injection espacés les uns des autres et alimentés par des produits liquides différents, les tubes d'injection étant susceptibles de coopérer successivement selon un ordre déterminé avec le tube de réception du dispositif.

Selon un premier mode de réalisation préféré de la présente invention, chacun des orifices de sortie des tubes d'injection est situé à proximité de l'orifice d'entrée du tube de réception du dispositif. Ceci permet bien entendu de présenter un dispositif de conception relativement simple, et pouvant supporter des vitesses de fonctionnement élevées.

Selon un second mode de réalisation préféré de la présente invention, chaque tube d'injection est apte à être déplacé afin que son orifice de sortie se situe à proximité de l'orifice d'entrée du tube de réception du dispositif. Cette solution proposée autorise avantageusement l'emploi d'un nombre important de tubes d'injection, et conduit par conséquent à l'obtention d'un train de bouchons constitué d'une grande variété de produits liquides.

De façon préférée, les tubes d'injection sont alors placés sur un support de tubes apte à être animé d'un mouvement de translation et/ou de rotation par rapport au tube de réception du dispositif.

Selon un troisième mode de réalisation préféré de la présente invention, le tube de réception du dispositif est apte à être déplacé afin que son orifice d'entrée se situe à proximité de l'orifice de sortie d'un tube d'injection déterminé.

Il est également possible de prévoir pour les trois modes de réalisation préférés, que chaque tube d'injection est un micro-tube, par exemple apte à injecter dans le tube de réception une quantité de produit liquide inférieure à 1 millilitre.

De plus, avantageusement, le dispositif de distribution comprend des moyens d'analyse d'une goutte ou d'un pont liquide situé entre l'orifice de sortie d'un tube d'injection et l'orifice d'entrée du tube de réception du dispositif, ces moyens d'analyse étant préférentiellement des moyens de détection par fluorescence.

D'autre part, l'invention a également pour objet un procédé de distribution d'au moins un produit liquide, le procédé étant susceptible d'être mis en oeuvre par l'intermédiaire d'un dispositif de distribution tel que celui objet de l'invention et décrit ci-dessus. Le procédé selon l'invention comprend la réitération des étapes suivantes :
- injection d'un produit liquide depuis un tube d'injection, afin de former une goutte du produit liquide faisant saillie en dehors du tube d'injection et étant en contact avec l'orifice d'entrée du tube de réception du dispositif ;
- mise en pression du liquide non-miscible situé à l'intérieur du réservoir étanche, afin de décrocher la goutte de produit liquide de l'orifice de sortie du tube d'injection, et de pousser la goutte à l'intérieur du tube de réception du dispositif.
   Selon un mode de réalisation préféré, l'étape d'injection d'un produit liquide, engendrant la formation de la goutte en contact avec l'orifice de sortie du tube d'injection et l'orifice d'entrée du tube de réception, est suivie d'une étape d'écoulement du produit liquide depuis le tube d'injection en direction du tube de réception en passant par la goutte, cette dernière remplissant la fonction de pont liquide entre les deux tubes.
   En conséquence, il est possible de réaliser des injections de volumes très importants de produits liquides, largement supérieurs au volume de la goutte formant le pont liquide entre le tube d'injection et le tube de réception du dispositif.
   D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique d'un dispositif de distribution selon un premier mode de réalisation préféré de la présente invention ;
- les figures 2a à 2d représentent des vues schématiques symbolisant le principe de fonctionnement du dispositif de distribution représenté sur la figure 1, détaillant le passage du produit liquide d'un tube d'injection au tube de réception du dispositif ; et
- la figure 3 représente une vue schématique d'un dispositif de distribution selon un second mode de réalisation préféré de la présente invention.

### EXPOSÉ DÉTAILLÉ DE MODES DE RÉALISATION PRÉFÉRÉS

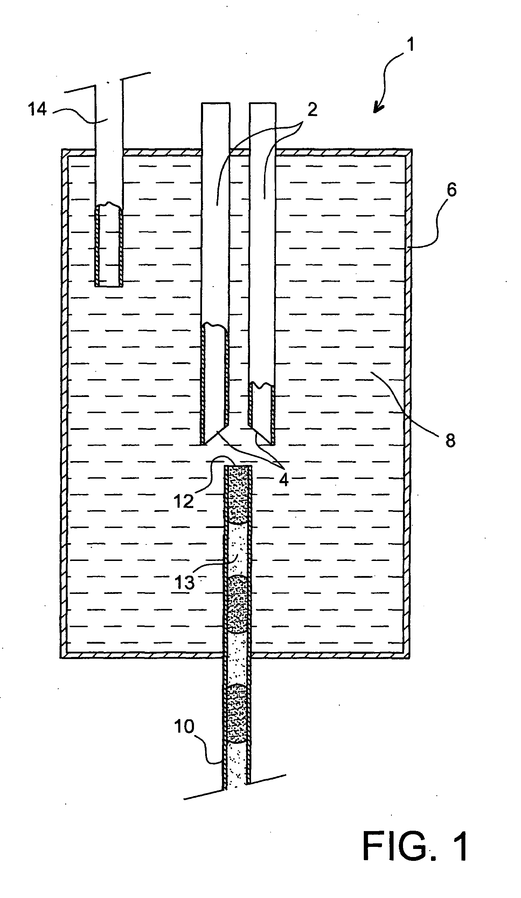

La figure 1 illustre un dispositif de distribution 1 d'au moins un produit liquide, selon un premier mode de réalisation préféré de la présente invention.

Dans ce mode de réalisation préféré, le dispositif 1 comporte deux tubes d'injection 2 espacés et positionnés sensiblement parallèlement l'un par rapport à l'autre, selon une direction sensiblement verticale. Le dispositif 1 pourrait bien entendu comporter davantage de tubes d'injection 2, sans sortir du cadre de l'invention. Les tubes d'injection 2 disposent chacun d'un orifice de sortie 4 correspondant à une extrémité inférieure visible sur la figure 1, ces orifices de sortie 4 débouchant à l'intérieur d'un réservoir étanche 6 rempli d'un liquide non-miscible 8, de préférence constitué par de l'huile. Notons que chacun des tubes d'injection 2 est apte à être alimenté par un produit liquide différent, et que ces tubes 2 sont de préférence des micro-tubes d'un diamètre intérieur adapté en fonction des caractéristiques du produit liquide utilisé telles que la viscosité ou la tension superficielle, pour obtenir la formation d'une goutte ou d'un pont liquide au niveau de l'orifice de sortie 4 du tube d'injection 2. Ainsi, le dispositif 1 selon l'invention peut être utilisé pour équiper des systèmes de très petite échelle, tels que des biopuces, des « lab-on-a-chip », ou encore des dispositifs de microfluidique. Des vannes ou des systèmes d'injection (non représentés) sont placés dans chacun des tubes 2, pour commander sélectivement la distribution de chacun des produits liquides.

Le dispositif de distribution 1 comprend également un tube de réception 10, sensiblement vertical, dont un orifice d'entrée 12, correspondant à son extrémité supérieure visible sur la figure 1, débouche également dans le réservoir étanche 8. Un train de bouchons 13, constitué par l'empilement alterné de petits volumes des deux produits liquides provenant des tubes d'injection 2, se trouve à l'intérieur du tube de réception 10, afin d'être éjecté de façon continue du dispositif 1.

Dans ce mode de réalisation, les tubes d'injection 2 et le tube de réception 10 sont fixés et positionnés de telle sorte que chaque orifice de sortie 4 est espacé de l'orifice d'entrée 12, et que chacun des ces orifices de sortie 4 se situe à proximité de l'orifice d'entrée 12 du tube de réception 10.

Comme cela est visible sur la figure 1, la proximité des différents orifices 4 et 12 peut être assurée en disposant le tube de réception 10 sensiblement en dessous et entre les deux tubes d'injection 2. Il est également mentionné le fait que les tubes d'injection 2 et de réception 10 sont positionnés sensiblement parallèlement les uns aux autres, dans un même plan. En outre, les orifices de sortie 4 des tubes d'injection 2 disposent chacun de moyens de guidage de la goutte, de sorte que son grossissement s'effectue en direction de l'orifice d'entrée 12 du tube de réception 10, et non en direction d'un orifice de sortie 4 d'un autre tube d'injection 2. Dans le mode de réalisation préféré décrit, ces moyens de guidage de la goutte sont constitués par la forme spécifique de l'orifice de sortie 4, ce dernier étant biseauté de façon à être légèrement tourné vers l'orifice d'entrée 12 du tube de réception 10. Par ailleurs, il est précisé que ces moyens de guidage pourraient également prendre la forme d'un fil reliant les orifices 4 et 12, une protubérance, ou tout autre moyen pouvant contribuer à étirer, confiner ou déformer la goutte.

Le dispositif 1 comprend en outre des moyens de mise en pression du liquide non-miscible 8, notamment constitués par une entrée 14 de liquide non-miscible 8, apte à être ouverte en vue de faire pénétrer du liquide 8 à l'intérieur du réservoir étanche 6, et d'engendrer par conséquent une augmentation de la pression à l'intérieur de ce réservoir.

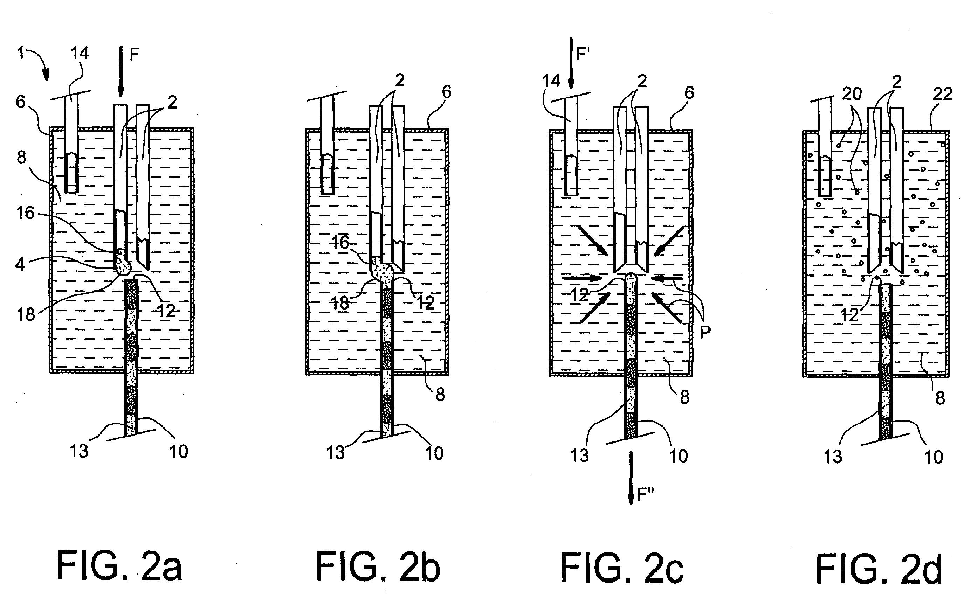

En référence aux figures 2a à 2d, il est représenté des vues schématiques symbolisant le principe de fonctionnement du dispositif de distribution 1 selon le premier mode de réalisation préféré de l'invention.

Comme cela a déjà été précisé ci-dessus, les produits liquides constituant le train de bouchons 13 proviennent des tubes d'injection 2, ces derniers coopérant alternativement avec le tube de réception 10.

Lorsqu'un volume déterminé de produit liquide 16 doit être injecté dans le tube de réception 10 pour rejoindre le train de bouchons 13, la vanne ou le système d'injection du type seringue, pousse seringue, ou pompe qui équipe le tube d'injection 2 autorise le passage du volume de produit liquide déterminé en direction de l'orifice de sortie 4, comme le montre la flèche F de la figure 2a. Naturellement, durant l'injection du produit liquide 16 dans le réservoir étanche 6, l'entrée 14 des moyens de mise en pression du liquide non-miscible 8 est fermée.

Une goutte 18 de produit liquide 16 commence alors à se former en faisant saillie en dehors du tube d'injection 2, cette goutte 18 étant confinée par le liquide non-miscible 8 présent à l'intérieur du réservoir étanche 6. Notons que la goutte 18 reste accrochée par capillarité à l'orifice de sortie 4 du tube d'injection 2.

En poursuivant l'injection du produit liquide 16, la goutte 18 grossit jusqu'à entrer en contact avec l'orifice d'entrée 12 du tube de réception 10, de manière à créer un pont liquide entre les deux tubes 2 et 10. Notons que dès que la goutte 18 se stabilise en entrant en contact avec l'orifice de sortie 12, le liquide 16 peut également commencer à descendre dans le tube de réception 10, sans que les moyens de mise en pression du liquide non-miscible 8 ne soient encore actionnés.

L'injection du produit liquide 16 est stoppée lorsque la quasi-totalité du volume déterminé de ce produit 16 se situe dans la goutte 18, comme le montre schématiquement la figure 2b représentant un état dans lequel la goutte 18 est stabilisée. En effet, une partie relativement faible du volume déterminé de produit liquide 16 est présente à la fois dans le tube d'injection 2 et dans le tube de réception 10, afin de permettre l'accrochage de la goutte 18 aux orifices de sortie 4 et d'entrée 12.

Selon un mode de réalisation préféré de la présente invention, il est également possible de prévoir que lorsque la goutte 18 forme un pont liquide entre les deux tubes 2 et 10, un écoulement de liquide 16 est réalisé depuis le tube d'injection 2 en direction du tube de réception 10, de sorte que la quantité de produit liquide 16 injecté dans le tube de réception 10 et transitant par le pont liquide soit supérieure au simple volume de la goutte 18. Ainsi, on est en mesure de procéder à des injections en continu de volumes très importants de type industriels, d'un tube d'injection 2 quelconque vers le tube de réception 10 du dispositif 1, en passant par la goutte 18 formant le pont liquide entre les deux tubes 2 et 10.

Ensuite, lorsque la goutte 18 est entrée en contact avec l'orifice d'entrée 12 du tube de réception 10 pour former le pont liquide, ou lorsque l'écoulement de produit 16 empruntant le pont liquide formé en direction du tube de réception 10 est achevé, il est procédé à la mise en pression du liquide non-miscible 8. Cette étape est réalisée en ouvrant l'entrée 14 et en introduisant une quantité déterminée de liquide non-miscible 8 à l'intérieur du réservoir étanche 6. L'introduction de la quantité déterminée de liquide non-miscible 8 est symbolisée par la flèche F' de la figure 2c, cette dernière représentant également la pression appliquée sur la goutte ou le pont liquide 18 par l'intermédiaire des flèches P.

Le tube d'injection 2 en contact avec la goutte 18 étant alors obturé à son extrémité opposée à celle intégrant l'orifice de sortie 4, la pression P répartie autour de la goutte 18 entraîne celle-ci vers l'intérieur du tube de réception 10, ce dernier ayant ses deux extrémités ouvertes. On assiste alors à un décrochage de la goutte ou du pont liquide 18 de l'orifice de sortie 4 du tube d'injection 2, ainsi qu'à l'introduction du produit liquide 16 constituant la goutte 18 à l'intérieur du tube de réception 10. Le produit liquide 16 vient alors se joindre au train de bouchons 13 déjà existant, et provoque le déplacement de celui-ci vers l'extérieur du dispositif 1, comme le montre la flèche F''.

En référence à la figure 2d, la mise en pression du liquide non-miscible 8 est stoppée par la fermeture de l'entrée 14 du dispositif 1. Cette fermeture est opérée lorsque le volume déterminé du produit liquide 16 a été intégralement introduit dans le tube de réception 10. Par ailleurs, il est précisé que cette fermeture peut également avoir lieu uniquement lorsqu'une petite quantité de liquide non-miscible 8 a été introduite dans le tube de réception 10, créant ainsi une séparation entre chaque volume de produit liquide du train de bouchons 13.

Toujours en référence à la figure 2d, on s'aperçoit que lorsque le produit liquide 16 contient des bulles de gaz 20, celles-ci sont aptes à s'échapper dans le réservoir étanche 6 en direction d'une surface 22 de celui-ci, en empruntant l'espace présent entre l'orifice de sortie 4 du tube d'injection 2, et l'orifice d'entrée 12 du tube de réception 10.

L'ensemble des opérations qui viennent d'être décrites pour réaliser le transfert d'un volume déterminé de produit liquide 16, de l'un des tubes d'injection 2 vers le tube de réception 10, sont ensuite réitérées avec l'autre tube de réception 2 contenant un produit liquide différent. L'alternance dans la coopération entre les tubes d'injection 2 et le tube de réception 10 est pratiquée de façon continue, de manière à obtenir une éjection également continue du train de bouchons 13 en dehors du dispositif 1.

La réalisation des injections de produits liquides dans les tubes d'injection 2 et le pilotage de l'ouverture/fermeture de l'entrée 14 du liquide non-miscible 8 sont effectués à l'aide d'une unité de commande électronique, mécanique, pneumatique ou manuelle (non représentée), reliée au dispositif de distribution 1. Notons qu'avec une telle unité de commande, il est facilement possible de programmer les vitesses d'injection ainsi que la valeur des volumes des produits liquides à injecter, ces données conditionnant directement la vitesse de distribution du train de bouchons 13 hors du dispositif 1.

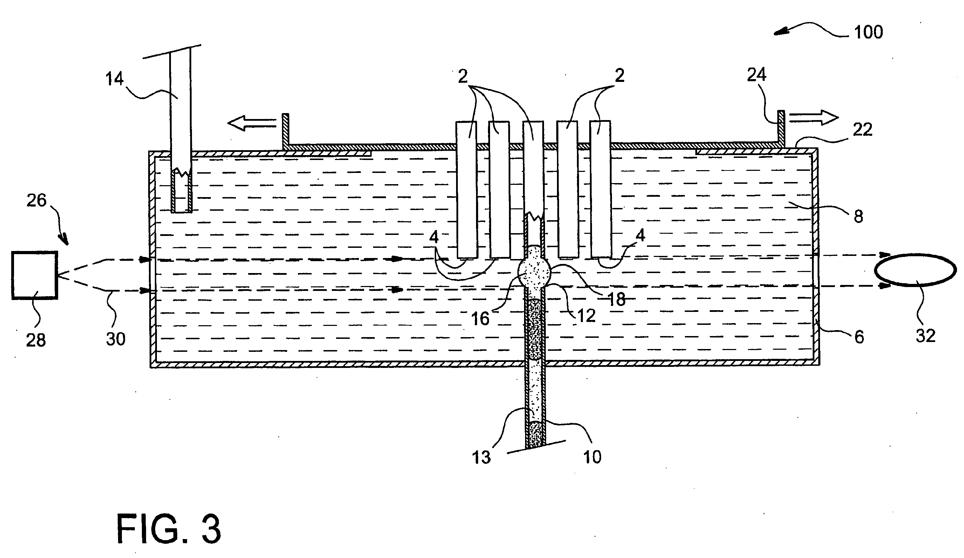

Selon un second mode de réalisation préféré de la présente invention et en référence à la figure 3, il est représenté un dispositif de distribution 100 d'une pluralité de produits liquides.

Comme dans le mode de réalisation préféré décrit précédemment, le dispositif de distribution 100 comprend une pluralité de tubes d'injection 2 sensiblement verticaux, chacun muni d'un orifice de sortie 4. Les orifices de sortie 4, correspondant aux extrémités inférieures des tubes 2 visibles sur la figure 3, débouchent chacun dans un réservoir étanche 6 rempli d'un liquide non-miscible 8, constitué de préférence par de l'huile.

De même, le dispositif de distribution 100 comprend également un tube de réception 10 sensiblement vertical, dont un orifice d'entrée horizontal 12, correspondant à son extrémité supérieure visible sur la figure, débouche également dans le réservoir étanche 8. Un train de bouchons 13, constitué par l'empilement alterné de petits volumes de produits liquides provenant des tubes d'injection 2, se trouve à l'intérieur du tube de réception 10, afin d'être éjecté de façon continue du dispositif 100.

Enfin, le dispositif 100 comprend en outre des moyens de mise en pression du liquide non-miscible 8, notamment constitués par une entrée 14 de liquide non-miscible 8, apte à être ouverte en vue de faire pénétrer du liquide 8 à l'intérieur du réservoir étanche 6, et d'engendrer par conséquent une augmentation de la pression à l'intérieur de ce réservoir.

Contrairement au dispositif de distribution 1 du premier mode de réalisation préféré de la présente invention, le dispositif 100 comprend une pluralité de tubes d'injection 2 placés sur un support de tubes 24 mobile. Les tubes d'injection 2 sont placés les uns à côté des autres et sensiblement parallèlement dans le support de tubes 24, ce dernier étant apte à être animé d'un mouvement de translation et/ou de rotation par rapport au tube de réception 10, monté fixement sur le réservoir étanche 6. Ainsi, lorsque le train de bouchons 13 doit être complété par un produit liquide spécifique 16, le support de tubes 24 est mis en mouvement afin de provoquer le déplacement du tube d'injection 2 alimenté par le produit liquide 16, de sorte que l'orifice de sortie 4 de ce tube 2 se situe à proximité de l'orifice d'entrée 12 du tube de réception 10.

Une fois le déplacement du tube d'injection 2 opéré, ce déplacement entraînant de préférence la mise en regard de l'orifice de sortie 4 de ce tube 2 et de l'orifice d'entrée 12 du tube de réception 10, les opérations de transfert du produit liquide 16 décrites ci-dessus et illustrées par les figures 2a à 2d peuvent être effectuées de manière rigoureusement identique.

Une unité de commande (non représentée), du type électronique, mécanique, pneumatique ou encore manuelle est alors capable d'ordonner les mises en regard successives des différents orifices 4 et 12, afin que les tubes d'injection 2 coopèrent avec le tube de réception 10 successivement et selon un ordre déterminé programmé dans l'unité de commande. Il est précisé que l'unité de commande prévue pour gérer les déplacements des tubes d'injection 2, peut également être destinée à piloter les vitesses d'injection ainsi que la valeur des volumes des produits liquides à injecter.

Comme on peut le voir sur la figure 3, le dispositif 100 comprend en outre des moyens d'analyse 26 de la goutte 18 ou du pont liquide de produit 16, cette goutte 18 étant située entre l'orifice de sortie 4 du tube d'injection 2 et l'orifice d'entrée 12 du tube de réception 10. De préférence, les moyens d'analyse 26 sont des moyens de détection par fluorescence, constitués par une source de lumière 28 générant un faisceau lumineux 30 traversant le réservoir étanche 6, en passant dans l'espace situé entre l'orifice de sortie 4 du tube d'injection 2 et l'orifice d'entrée 12 du tube de réception 10. Après avoir traversé le réservoir étanche 6, le faisceau lumineux 30 se projette sur un écran de réception de la fluorescence 32. En fonction de la nature de la réception de la fluorescence, il est alors possible de d'analyser la goutte 18.

Selon un troisième mode de réalisation préféré (non représenté) de la présente invention, le dispositif de distribution est conçu de manière à ce que le tube de réception est apte à se déplacer par rapport à une pluralité de tube d'injection disposés sensiblement parallèlement les uns à côté des autres, et montés fixement sur le réservoir étanche du dispositif. Ainsi, la mobilité du tube de réception permet à ce dernier d'amener son orifice d'entrée à proximité de l'orifice de sortie d'un tube d'injection déterminé, en fonction du produit liquide destiné à rejoindre le train de bouchons du dispositif.

Tout comme dans le second mode de réalisation préféré de l'invention, le tube de réception peut être animé d'un mouvement de translation et/ou de rotation par rapport aux tubes d'injection du dispositif.

Bien entendu, diverses modifications peuvent être apportées par l'homme du métier aux dispositifs de distribution 1 et 100 qui viennent d'être décrits, uniquement à titre d'exemples non limitatifs.

## Revendications

1. Dispositif de distribution (1,100) d'au moins un produit liquide (16), ledit dispositif (1,100) comprenant au moins un tube d'injection (2) alimenté par un produit liquide (16) et comportant un orifice de sortie (4) susceptible de coopérer avec un orifice d'entrée (12) d'un tube de réception (10) de chaque produit liquide, **caractérisé en ce que** l'orifice de sortie (4) de chaque tube d'injection (2) et l'orifice d'entrée (12) du tube de réception (10) débouchent dans un réservoir étanche (6) rempli d'un liquide non-miscible (8), l'orifice de sortie (4) de chaque tube d'injection (2) étant espacé de l'orifice d'entrée (12) du tube de réception (10) et apte à être situé à proximité de ce dernier, ledit dispositif (1,100) comprenant également des moyens de mise en pression (14) du liquide non-miscible (8).

2. Dispositif de distribution (1,100) selon la revendication 1, **caractérisé en ce qu'**il comprend au moins deux tubes d'injection (2) espacés les uns des autres et alimentés par des produits liquides différents, les tubes d'injection (2) étant susceptibles de coopérer successivement selon un ordre déterminé avec le tube de réception (10) dudit dispositif (1,100).

3. Dispositif de distribution (1) selon la revendication 2, **caractérisé en ce que** chacun des orifices de sortie (4) des tubes d'injection (2) est situé à proximité de l'orifice d'entrée (12) du tube de réception (10) dudit dispositif (1).

4. Dispositif de distribution (1) selon la revendication 3, **caractérisé en ce que** l'orifice de sortie (4) de chacun des tubes d'injection (2) est muni de moyens de guidage d'une goutte (18) de produit liquide à distribuer, de sorte que la goutte (18) se forme entre ledit orifice de sortie (4) et l'orifice d'entrée (12) du tube de réception (10).

5. Dispositif de distribution (100) selon la revendication 2, **caractérisé en ce que** chaque tube d'injection (2) est apte à être déplacé afin que son orifice de sortie (4) se situe à proximité de l'orifice d'entrée (12) du tube de réception (10) dudit dispositif (100).

6. Dispositif de distribution (100) selon la revendication 5, **caractérisé en ce que** les tubes d'injection (2) sont placés sur un support de tubes (24) apte à être animé d'un mouvement de translation et/ou de rotation par rapport au tube de réception (10) dudit dispositif (100).

7. Dispositif de distribution (1,100) selon la revendication 2, **caractérisé en ce que** le tube de réception (10) dudit dispositif (1,100) est apte à être déplacé afin que son orifice d'entrée (12) se situe à proximité de l'orifice de sortie (4) d'un tube d'injection (2) déterminé.

8. Dispositif de distribution (1,100) selon l'une quelconque des revendications précédentes, **caractérisé en ce que** chaque tube d'injection (2) est un micro-tube.

9. Dispositif de distribution (1,100) selon l'une quelconque des revendications précédentes, **caractérisé en ce que** le liquide non-miscible (8) situé à l'intérieur du réservoir étanche (6) est de l'huile.

10. Dispositif de distribution (1,100) selon l'une quelconque des revendications précédentes, **caractérisé en ce qu'**il comprend des moyens d'analyse (26) d'une goutte (18) de produit liquide (16) située entre l'orifice de sortie (4) d'un tube d'injection (2) et l'orifice d'entrée (12) du tube de réception (10) dudit dispositif (1,100).

11. Dispositif de distribution (1,100) selon la revendication 10, **caractérisé en ce que** les moyens d'analyse (26) sont des moyens de détection par fluorescence.

12. Dispositif de distribution (1,100) selon l'une quelconque des revendications précédentes, **caractérisé en ce qu'**il est apte à équiper une biopuce ou un dispositif de microfluidique.

13. Procédé de distribution d'au moins un produit liquide (16) mis en oeuvre par l'intermédiaire d'un dispositif de distribution (1,100) selon l'une quelconque des revendications précédentes, **caractérisé en ce qu'**il comprend la réitération des étapes suivantes :
- injection d'un produit liquide (16) depuis un tube d'injection (2), afin de former une goutte (18) dudit produit liquide (16) faisant saillie en dehors du tube d'injection (2) et étant en contact avec l'orifice d'entrée (12) du tube de réception (10) dudit dispositif (1,100) ;
- mise en pression du liquide non-miscible (8) situé à l'intérieur du réservoir étanche (6), afin de décrocher la goutte (18) de produit liquide (16) de l'orifice de sortie (4) du tube d'injection (2), et de pousser ladite goutte (18) à l'intérieur du tube de réception (10) dudit dispositif (1,100).

14. Procédé de distribution selon la revendication 13, **caractérisé en ce que** les étapes d'injection d'un produit liquide (16) et de mise sous pression du liquide non-miscible (8) sont précédées par une étape de mise en regard de l'orifice de sortie (4) du tube d'injection (2) contenant ledit produit liquide (16), et de l'orifice d'entrée (12) du tube de réception (10) dudit dispositif (1,100).

15. Procédé de distribution selon la revendication 14, **caractérisé en ce que** l'étape de mise en regard est réalisée par déplacement du tube d'injection (2) contenant ledit produit liquide (16).

16. Procédé de distribution selon la revendication 14, **caractérisé en ce que** l'étape de mise en regard est réalisée par déplacement du tube de réception (10) dudit dispositif (1,100).

17. Procédé de distribution selon l'une quelconque des revendications 14 à 16, **caractérisé en ce que** l'étape de mise en regard est réalisée par l'intermédiaire d'une unité de commande.

18. Procédé de distribution selon l'une quelconque des revendications 13 à 17, **caractérisé en ce que** l'étape d'injection d'un produit liquide (16), engendrant la formation de la goutte (18) en contact avec l'orifice de sortie (4) du tube d'injection (2) et l'orifice d'entrée (12) du tube de réception (10), est suivie d'une étape d'écoulement du produit liquide (16) depuis le tube d'injection (2) en direction du tube de réception (10) en passant par la goutte (18), cette dernière remplissant la fonction de pont liquide entre les deux tubes (2,10).

## Claims

1. Device (1, 100) for distribution of at least one liquid product (16), said device (1, 100) comprising at least one injection tube (2) supplied by a liquid product (16) and being provided with an outlet orifice (4) capable of cooperating with an inlet orifice (12) of a reception tube (10) for reception of each liquid product, **characterized in that** the outlet orifice (4) of each injection tube (2) and the inlet orifice (12) of the reception tube (10) open up into a sealed reservoir (6) full of an immiscible liquid (8), the outlet orifice (12) of each injection tube (2) being at a spacing from the inlet orifice (12) of the reception tube (10) and able to be located close to this reception tube (12), the device (1) also comprising means (14) for pressurizing the immiscible liquid (8).

2. Device for distribution (1, 100) according to claim 1, **characterized in that** it comprises at least two injection tubes (2) at a distance from each other and supplied by different liquid products, the injection tubes (2) possibly cooperating with the reception tube (10) of the said device (1, 100), in sequence and in a determined order.

3. Device for distribution (1) according to claim 2, **characterized in that** each of the outlet orifices (4) of the injection tubes (2) is close to the inlet orifice (12) of the reception tube (10) of said device (1).

4. Device for distribution (1) according to claim 3, **characterized in that** the outlet orifice (4) of each of the injection tubes (2) is provided with guidance means for a drop (18) of the liquid product to be distributed, such that the drop (18) forms between said outlet orifice (4) and the inlet orifice (12) of the reception tube (10).

5. Device for distribution (100) according to claim 2, **characterized in that** each injection tube (2) may be displaced such that its outlet orifice (4) is close to the inlet orifice (12) of the reception tube (10) of said device (100).

6. Device for distribution (100) according to claim 5, **characterized in that** the injection tubes (2) are placed on a tube support (24) able to be moved in translation and / or rotation with respect to the reception tube (10) of the said device (100).

7. Device for distribution (1, 100) according to claim 2, **characterized in that** the reception tube (10) of said device (1, 100) may be moved so that its inlet orifice (12) is close to the outlet orifice (4) of a determined injection tube (2).

8. Device for distribution (1, 100) according to any one of the above claims, **characterized in that** each injection tube (2) is a micro-tube.

9. Device for distribution (1, 100) according to any one of the above claims, **characterized in that** the immiscible liquid (8) located inside the sealed reservoir (6) is oil.

10. Device for distribution (1, 100) according to any one of the above claims, **characterized in that** it comprises means (26) for analyzing a drop (18) of liquid product (16) located between the outlet orifice (4) of an injection tube (2) and the inlet orifice (12) of the reception tube (10) of said device (1, 100).

11. Device for distribution (1, 100) according to claim 10, **characterized in that** the analysis means (26) are fluorescence detection means.

12. Device for distribution (1, 100) according to any one of the above claims, **characterized in that** it may be used on a biochip or a microfluidic device.

13. Method for distributing at least one liquid product (16) through a distribution device (1, 100) according to any one of the above claims, **characterized in that** it consists of reiterating the following steps:
- injection of a liquid product (16) from an injection tube (2), in order to form a drop (18) of said liquid product (16) projecting outside the injection tube (2) and coming into contact with the inlet orifice (12) of the reception tube (10) of said device (1, 100);
- pressurization of the immiscible liquid (8) located inside the sealed reservoir (6) to detach the drop (18) of liquid product (16) from the outlet orifice (4) of the injection tube (2) and to push the said drop (18) inside the reception tube (10) of said device (1, 100).

14. Method for distributing according to claim 13, **characterized in that** the steps for injecting a liquid product (16) and pressurizing the immiscible liquid (8) are preceded by a step in which the outlet orifice (4) of the injection tube (2) containing said liquid product (16) is placed facing the inlet orifice (12) of the reception tube (10) of said device (1, 100).

15. Method for distributing according to claim 14, **characterized in that** the step in which the orifices are placed facing each other is done by moving the injection tube (2) containing said liquid product (16).

16. Method for distributing according to claim 14, **characterized in that** the step in which the orifices are placed facing each other is done by moving the reception tube (10) of said device (1, 100).

17. Method for distributing according to any one of claims 14 to 16, **characterized in that** the step in which the orifices are placed facing each other is done through a control unit.

18. Method for distributing according to any one of claims 13 to 17, **characterized in that** the step to inject a liquid product (16) causing formation of the drop (18) in contact with the outlet orifice (4) of the injection tube (2) and the inlet orifice (12) of the reception tube (10), is followed by a step in which liquid product (16) is poured from the injection tube (2) towards the reception tube (10) passing through the drop (18), which forms a liquid bridge between the two tubes (2, 10).

## Patentansprüche

1. Vorrichtung (1,100) zur Ausgabe wenigstens eines flüssigen Produkts (16), wobei diese Vorrichtung (1,100) wenigstens ein mit einem flüssigen Produkt (16) versorgtes Einspeisungsrohr (2) mit einer Ausgangsöffnung (4) umfasst, die mit einer Eingangsöffnung (12) eines Aufnahmerohrs (10) jedes flüssigen Produkts kooperieren kann,
**dadurch gekennzeichnet, dass** die Ausgangsöffnung (4) jedes Einspeisungsrohrs (2) und die Eingangsöffnung (12) des Aufnahmerohrs (10) in einem dichten Behälter (6) münden, der mit einer unmischbaren Flüssigkeit (8) gefüllt ist, und die Ausgangsöffnung (4) jedes Einspeisungsrohrs (2) von der Eingangsöffnung (12) des Aufnahmerohrs (10) beabstandet ist und in dessen Nähe gebracht bzw. angeordnet werden kann, wobei die genannte Vorrichtung (1,100) auch Einrichtungen (14) zur Unterdrucksetzung der unmischbaren Flüssigkeit (8) umfasst.

2. Ausgabevorrichtung (1,100) nach Anspruch 1, **dadurch gekennzeichnet, dass** sie wenigstens zwei voneinander beabstandete und mit unterschiedlichen flüssigen Produkten versorgte Einspeisungsrohre (2) umfasst, wobei die Einspeisungsrohre (2) entsprechend einer bestimmten Reihenfolge mit dem Aufnahmerohr (10) der genannten Vorrichtung (1,100) kooperieren können.

3. Ausgabevorrichtung (1) nach Anspruch 2, **dadurch gekennzeichnet, dass** sich jede der Ausgangsöffnungen (4) der Einspeisungsrohre (2) in der Nähe der Eingangsöffnung (12) des Aufnahmerohrs (10) der genannten Vorrichtung (1) befindet.

4. Ausgabevorrichtung (1) nach Anspruch 3, **dadurch gekennzeichnet, dass** die Ausgangsöffnung (4) jedes Einspeisungsrohrs (2) derartige Einrichtungen zur Führung bzw. Bildung eines Tropfens (18) des auszugebenden flüssigen Produkts umfasst, dass sich der Tropfen (18) zwischen der Ausgangsöffnung (4) und der Eingangsöffnung (12) des Aufnahmerohrs (10) bildet.

5. Ausgabevorrichtung (100) nach Anspruch 2, **dadurch gekennzeichnet, dass** jedes Einspeisungsrohr (2) so verschoben werden kann, dass seine Ausgangsöffnung (4) sich in der Nähe der Eingangsöffnung (12) des Aufnahmerohrs (10) der genannten Vorrichtung (100) befindet.

6. Ausgabevorrichtung (100) nach Anspruch 5, **dadurch gekennzeichnet, dass** die Einspeisungsrohre (2) an einem Rahrträger (24) angebracht sind, der Translations- und/oder Rotatiortsbewegungen ausführen kann in Bezug auf das Aufnahmerohr (10) der genannten Vorrichtung (100).

7. Ausgabevorrichtung (1,100) nach Anspruch 2, **dadurch gekennzeichnet, dass** das Aufnahmerohr (10) der genannten Vorrichtung (1,100) so verschoben werden kann, dass seine Eingangsöffnung (12) sich in der Nähe der Ausgangsöffnung (4) eines bestimmten Einspeisungsrohrs (2) befindet.

8. Ausgabevorrichtung (1,100) nach einem der vorangehenden Ansprüche, **dadurch gekennzeichnet, dass** jedes Einspeisungsrohr (2) ein Mikrorohr ist.

9. Ausgabevorrichtung (1,100) nach einem der vorangehenden Ansprüche, **dadurch gekennzeichnet, dass** die unmischbare Flüssigkeit (8), die sich im Innern des dichten Behälters (6) befindet, Öl ist.

10. Ausgabevorrichtung (1,100) nach einem der vorangehenden Ansprüche, **dadurch gekennzeichnet, dass** sie Einrichtungen (26) zur Analyse eines Tropfens (18) des flüssigen Produkts (16) umfasst, der sich zwischen der Ausgangsöffnung (4) eines Einspeisungsrohrs (2) und der Eingangsöffnung (12) des Aufnahmerohrs (10) der genannten Vorrichtung (1,100) befindet.

11. Ausgabevorrichtung (1,100) nach Anspruch 10, **dadurch gekennzeichnet, dass** die Analyseeinrichtungen (26) Fluoreszenzdetektionseinrichtungen sind.

12. Ausgabevorrichtung (1,100) nach einem der vorangehenden Ansprüche, **dadurch gekennzeichnet, dass** man mit ihr einen Biochip oder eine Mikrofluidvorrichtung ausrüsten kann.

13. Verfahren zur Ausgabe wenigstens eines flüssigen Produkts (16), angewandt mit Hilfe einer Ausgabevorrichtung (1,100) nach einem der vorangehenden Ansprüche, **dadurch gekennzeichnet, dass** es die Wiederholung der folgenden Schritte umfasst:
- Einspeisung eines flüssigen Produkts (16) in ein Einspeisungsrohr (2), bis sich zwischen diesem Einspeisungsrohrs (2) und dem Aufnahmerohr (10) der genannten Vorrichtung (1,100) ein Tropfen (18) des genannten flüssigen Produkts (16) gebildet hat, der mit der Eingangsöffnung (12) Kontakt hat;
- Unterdrucksetzung der im Innern des dichten Behälters (6) befindlichen unmischbaren Flüssigkeit (8), um den Tropfen (18) des flüssigen Produkts (16) von der Ausgangsöffnung (4) des Einspeisungsrohrs (2) Ioszulösen und diesen Tropfen (18) in das Innere des Aufnahmerohrs (10) der genannten Vorrichtung (1,100) zu pressen.

14. Ausgabeverfahren nach Anspruch 13, **dadurch gekennzeichnet, dass** den Schritten der Einspeisung eines flüssigen Produkts (16) und der Unterdrucksetzung der unmischbaren Flüssigkeit (8) ein Schritt der Gegenüberpositionierung der Ausgangsöffnung (4) des das flüssige Produkt (16) enthaltenden Einspeisungsrohrs (2) und der Eingangsöffnung (12) des Aufnahmerohrs (10) der genannten Vorrichtung (1,100) vorausgeht.

15. Ausgabeverfahren nach Anspruch 14, **dadurch gekennzeichnet, dass** der Gegenüberpositionierungsschritt durch Verschiebung des das flüssige Produkt (16) enthaltenden Einspeisungsrohrs (2) realisiert wird.

16. Ausgabeverfahren nach Anspruch 14, **dadurch gekennzeichnet, dass** der Gegenüberpositionierungsschritt durch Verschiebung des Aufnahmerohrs (10) der genannten Vorrichtung (1,100) realisiert wird.

17. Ausgabeverfahren nach einem der Ansprüche 14 bis 16, **dadurch gekennzeichnet, dass** der Gegenüberpositionierungsschritt mittels einer Steuereinheit realisiert wird.

18. Ausgabeverfahren nach einem der Ansprüche 13 bis 17, **dadurch gekennzeichnet, dass** auf den Einspeisungsschritt eines flüssigen Produkts (16), der zur Bildung des Tropfens (18) führt, der Kontakt hat mit der Ausgangsöffnung (4) des Einspeisungsrohrs (2) und der Eingangsöffnung (12) des Aufnahmerohrs (10), ein Schritt folgt, in dem das flüssige Produkt (16) aus dem Einspeisungsrohr (2) in Richtung des Aufnahmerohrs (10) fließt, indem es den Tropfen (18) durchfließt, wobei dieser letztere die Funktion einer flüssigen Brücke zwischen den beiden Rohren (2,10) erfüllt.
